# EUROPEAN PATENT APPLICATION

(11) **EP 3 836 052 A1**
(43) Date of publication of application: **16.06.2021**
(21) Application number: 20207932.3
(22) Date of filing: 16.11.2020
(51) Int. Cl.: G06Q 10/06, G06Q 50/02

(54) **DATA SYSTEM AND METHOD FOR QUARRY AND MINING OPERATIONS**

(30) Priority: 11.12.2019 US 201916710510
(71) Applicant: Caterpillar Inc., Peoria, IL 61629-9510 (US)
(72) Inventor: Deenathayalan, Manivannan, 642006 Coimbatore (IN); Subramanian, Gautham, Peoria, IL 61615 (US); Weinhold, Donald, Peoria, IL 61614 (US); Shatters, Aaron, Montgomery, IL 60538 (US); Spielman, Michael, Brookfield, IL 60513 (US)
(74) Representative: Boult Wade Tennant LLP

(57) **Abstract**

A computer implemented system (150) and method for quarry and mining operation is configured to coordinate operation of a plurality of departing and arriving road trucks (130) and loading machines (124). The road trucks (130) may arrive and depart at a scale housing having a scale for weighing the trucks. The scale housing may be associated with a front end system (138) that can communicate arrival and departure data (278) with a backend system (144). The backend system (144) can receive customer order data (202) and generate job orders (218) for the loading machines (124). The backend system (144) can also associate the job orders (218) with the arrival data (224) upon arrival of the road truck.

## Description

### Technical Field

This patent disclosure relates generally to mining and aggregate material handling, and, more particularly to a system and method for managing and tracking the transportation of such materials at a worksite.

### Background

To produce construction materials, aggregates, and the like, raw materials are excavated from the ground and processed. Excavation may involve mining operations like digging, drilling, and blasting to separate the raw material from the earth. Processing may involve crushers and screens that reduce the excavated raw material into smaller sizes or different grades. The processed materials are then stored about the worksite at different zones or locations by grade, size, or type. The processed materials may be transported about the worksite by a series of conveyors and/or by haul trucks. In addition, different materials may be brought from remote mines to a central location. Because the processed materials typically aggregate, they form piles of loose material. The piles of material must be separated from each other in order to avoid intermixing of the different grades, sizes, and types of material. The materials are maintained at the worksite until sold to customers who may be construction contractors or firms or other end users of such materials.

To distribute the processed materials, road trucks hauling dump trailers or opened hopper trailers travel to the worksite to receive the material. A loading machine, such as a wheel loader or an excavator, may load the trailers with desired material from the specific piles. In some worksites, the piles locations may be situated considerable distances apart from each other. After entering a worksite, a truck may generally be directed to the vicinity where the pile containing the desired material is located. A truck may need to roam around in the vicinity to identify the exact location of the pile. Even after the pile is located, there is no certainty that the desired type of material and desired quantity of material would be present at the pile. In an event if desired type of material and desired quantity of material is not available at the pile, the truck may have to roam around to identify a pile that contains the desired quantity of desired type of material. This searching may delete valuable system resources and generate unnecessary traffic at the worksite.

It is therefore desirable to enable the road trucks to locate and arrive at the correct pile locations for loading the desired material quickly and efficiently. Because such materials are typically sold by quantity or weight, the road trucks and trailers are often weighed as they depart from the worksite. The present disclosure is directed to a system and method for managing and coordinating the transportation of materials and machines about the worksite.

### Summary

The disclosure describes, in one aspect, a data system for managing material loading at a worksite such as a quarry or mine. The data system include a backend system with non-transitory data storage storing a plurality of pile locations each having a particular material. The backend system is configured to receive a customer order data including a material type and a material quantity. Further, the backend system is configured to generate a job order associating the customer order data and to identify an identified pile location from among the plurality of pile locations at the worksite. The data system also includes a front end system at an entrance facility or scale housing configured to generate arrival data associated with a road truck arriving at the worksite and to communicate the arrival data to the backend system. The arrival data may include a road truck identification. The data system is also associated with an onboard controller on a loading machine configured to receive the job order matched to the road truck identification by the backend system.

In another aspect, the disclosure describes a method of managing material loading at a worksite like a quarry or mine. The method first involves receiving a customer order data specifying a material type and a material quantity. The method generates a job order based on the customer order data and identifies an identified pile location from among a plurality of pile locations at the worksite associated with particular materials. The method further receives arrival data from a front end system associated with an entrance facility or scale housing that is indicative of a road truck arriving at the worksite. The arrival data can include a road truck identification. The method communicates the identified pile location to the front end system for communication to the road truck. The method further associates the job order with the road truck identification and communicates the job order to an onboard controller associated with a loading machine.

### Brief Description of the Drawings

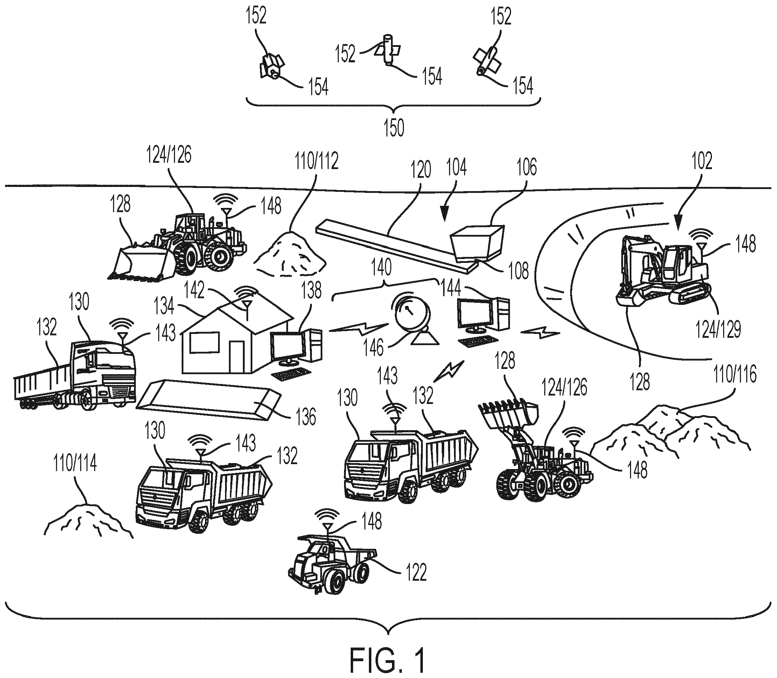

Figure 1 is a schematic illustration of a worksite such as a quarry in which mining materials may be excavated, processed and stored for later collection by one or more road trucks in accordance with an aspect of the disclosure.
Figure 2 is a schematic block diagram of a loading machine, in particular a wheel loader, including an onboard controller and an operator interface display in accordance with an aspect of the disclosure.
Figure 3 is an illustrative flow diagram of a possible process, routine, or algorithm that may be conducted by a backend system for receiving customer order data and assigning job orders in accordance with an aspect of the disclosure.
Figure 4 is an illustrative flow diagram of a possible process, routine, or algorithm that may be conducted by an onboard controller located onboard a loading machine while loading material to one or more road trucks.
Figure 5 is an illustrative flow diagram of a possible process, routine, or algorithm that may be conducted between a backend system and a front end system to obtain and analyze data regarding departing road trucks.

### Detailed Description

Now referring to the drawings, wherein whenever possible like reference numbers will refer to like elements, there is illustrated a worksite 100 such as a quarry for the exaction, processing, storage, and delivery of mined materials such as construction aggregates, mineral ores, and the like. Examples of these materials include stone, sand, sandstone, chalk, clay, coal, iron ore, copper ore, gypsum, etc. Various different operations, tasks, and processes may be conducted at different stages at the worksite 100. By way of example, to obtain the raw materials, the worksite 100 may be associated with one or more mines 102, which is the location where the raw materials are excavated from the ground. The mine 102 may be a surface mine in which the overburden (vegetation, dirt, and the like) is stripped away and removed to access the raw materials underneath. The raw materials may be separated from the ground by drilling, hammering, or blasting operations and removed from the mine 102. In other examples, the mine 102 may be a subsurface or underground mine in which tunnels are dug to access the raw materials. In possible examples, the mine 102 may be located onsite at the worksite 100 or may be located a significant distance from other the areas of the worksite. Once obtained from the mine 102, the raw materials may be directed through various processes conducted by different processing equipment 104. For example, to break or fragment the raw materials into smaller sizes or grades, the raw materials may be directed through one or more crushers 106 that may include intermeshing gears or jaws, or that may be impact hammer crushers. The crusher 106 may be operatively associated with a screen 108 that separates larger and smaller sizes or grades by allowing the finer materials to pass through while retaining larger sizes. Various other types of processing equipment 104 may be employed to refine the raw materials to have desired qualities.

The processed materials, because of their aggregate or granular form, may be disposed in various piles 110 about the worksite 100 until they have been sold and their transportation from the worksite occurs. Because the processed materials are available in different sizes or grades, and because different types of material (e.g., stone and sand) may be obtained from the mine 102, the piles 110 are typically designated and separated by material type, grade, and/or other characteristics. Physical separation between the piles 110 should be maintained to preserve the homogeneity of the particular material in the pile. In addition, the piles 110 may be located at significant distances from each other, for example, due to the location of the processing machinery, (e.g. crusher 106 and screen 108), or due to the location within the mine 102 or among different mines from which the materials are obtained. In addition, the piles 110 may be placed in different zones or areas within the worksite 100 depending upon the type of material available (e.g., limestone verses sand) or the type of processing equipment 104 associated with the zone. Each zone in the worksite 100 can include one or more piles 110. So, for example, there may be a first pile location 112 having one type or grade of material, a second pile location 114 having a different type or grade of material, and a third pile location 116 having another different type or grade of material 118.

To transport the materials from the mines 102 and the processing equipment 104 to the piles 110, the worksite 100 may be operatively associated with various machines such as, for example, a belt conveyor 120 which may extend for substantial distances. In addition, one or more haul trucks 122, which may be large-sized off road trucks with opened dump bodies can be used to transport material about the worksite 100. To physically move or manipulate material in the piles 110, a plurality of loading machines 124 can be operatively associated with the worksite 190. Examples of loading machines 124 include a bucket loader 126 which includes a bucket 128 and which may be supported on wheels or, in an embodiment, continuous tracks to propel the bucket loader about the worksite. The bucket 128 can be mounted to the front of the bucket loader 126 on booms or arms so that the bucket 128 can be articulated through lifting and dumping motions. To provide power, the bucket loader 126 can also include a fuel combusting engine such as a diesel engine and to maneuver the bucket 128 the loader can be associated with a hydraulic system. Another example of a loading machine 124 is an excavator 129 that can include a bucket 128 disposed at the end of a mechanical linkage that can articulate with respect to itself to maneuver the bucket 128.

The worksite 100 may be associated with additional zones or areas responsible for performing specific operations associated with the extraction, processing, storage, and delivery of material. For example, to remove the material from the worksite 100 and transport it to an end use such as a construction site, customers or other responsible entities may send one or more road trucks 130 that are configured to haul the material. The road trucks 130 may include a dump body 132 or a similar structure that can hold the material. The dump body 132 may be an open topped structure to receive the material and may be tilted with respect to the rest of the road truck 130 to dump the material. The road trucks can be adapted to travel on highways or paved roads. When the road trucks 130 arrive at or depart from the worksite 100, they may encounter or pass through an entrance facility or a scale house 134, which may be a physical facility or location at the worksite 100. To weigh road trucks 130 departing from and/or entering the worksite 100, the scale house 134 is operatively associated with a large sized scale 136 that the road trucks can drive onto during measurement.

The entrance facility or scale house 134 can also provide accommodations for worksite personnel and road truck operators to exchange information and conduct transactions relating to the transportation of material from the worksite 100. To facilitate that exchange, the entrance facility or scale house 134 can be operatively associated with a front end system 138. The front end system 138 may be part of a larger worksite computer system 140 that may be configured as part of an enterprise network for monitoring and regulating the operations of the worksite 100. The front end system 138 can include physical components like processing devices or processors and input-output peripherals (e.g., keyboards, monitors, mice) that enables the entry of information and data in computer readable form. The front end system 138 can be responsible for entry and initial processing of data obtained when the road trucks 130 check in and check out when arriving and/or departing from the worksite 100. For example, in an embodiment, to establish wireless communication with the road trucks 130, the front end system 138 may be associated with a wireless transmitter/receiver 142 that can exchange radio wave communications with a similar transmitter/receiver 143 disposed on the road truck. The wireless communication can utilize any suitable technology standards or protocols such as Wi-Fi and Bluetooth. However, it is possible that parts of the exchange between the road trucks 130 and the scale house 134 associated with the front end system 138 can be accomplished through verbal exchanges or by exchanging traditional paperwork.

In addition to the front end system 138, to monitor and regulate other operations and information associated with the worksite 100, the worksite computer system 140 may be operatively associated with a backend system 144. The backend system 144 may be maintained by the owners/operators of the worksite 100, or may be maintained by an application service provider ("ASP"), through independent contractors or the like. Although in the illustrated embodiment, the functionality of the backend system 144 is depicted in a centralized manner, it may also be distributed over a plurality of computers and platforms networked together within the worksite computer system 140 and that may communicate and exchange information and data among various nodes. Like the front end system 138, the backend system 144 may include processing devices or processors and input-output peripherals for entry and processing of information and data in computer readable form and for the execution of software instructions and applications. The backend system 144 may also include data storage capabilities to store the software instructions and data in the form of random access memory or other volatile memory, read only memory or other permanent memory, or another suitable form of memory. The backend system 144 may be in operative communication via a network with the front end system 138 and with other computer systems associated with the worksite computer system 140. For example, the backend system 144 can be operatively associated with a telematics system 146 or the like that enables the backend system to communicate with the haul trucks 122 and the loading machines 124 operating about the worksite 100. Communication can occur wirelessly through radio waves if the haul trucks 122 and the loading machines 124 each including a wireless transmitter/receiver 148. Communication can also occur using any suitable protocol or standard such as Wi-Fi and Bluetooth and can occur over sufficient distances to cover the worksite 100. In addition to wireless communication, the backend system 144 may also include the functionality to communicate via conductive or optical lines.

In an embodiment, to determine the position of the haul trucks 122 and the loading machines 124 and possibly the road trucks 130 that may be moving about the worksite 100, the worksite may be operatively associated with a position determining system that may be implemented in any suitable form. For example, the position determining system can be realized as a global navigation satellite system (GNSS) or global positioning satellite (GPS) system 150. In the GNSS or GPS system 150, a plurality of manmade satellites 152 orbit about the earth at fixed or precise trajectories. Each satellite 152 includes a positioning transmitter 154 that transmits positioning signals encoding time and positioning information towards earth. By calculating, such as by triangulation, between the positioning signals received from different satellites, one can determine their instantaneous location on earth. In the present embodiment, the transmitter/receivers 148 on the haul trucks 122 and loading machines 124 and the transmitter/receivers 143 on the road trucks 130 can be configured to also receive the positioning signals from the positioning transmitters 154.

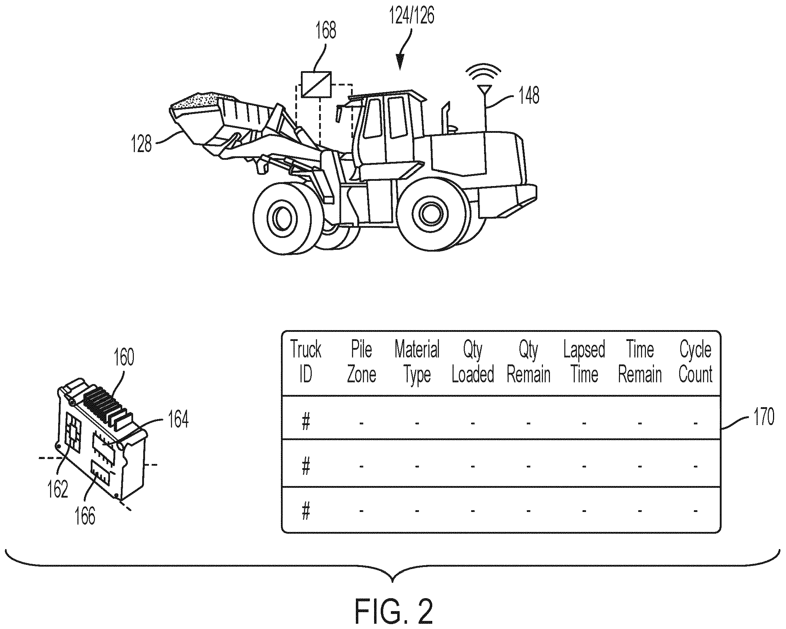

Referring to FIG. 2, there is illustrated systems and devices that may be operatively associated with the loading machines 124 such as a bucket loader 126 to facilitate operation at the worksite 100. In addition to the transmitter/receiver 148 that establishes communication with the worksite computer system 140 including the backend system 144, the loading machine 124 can include an onboard controller 160 such as an electronic control module or electronic control unit for monitoring and regulating operations of the loading machine 124. The onboard controller 160 can be a programmable computing device and can include one or more microprocessors 162 for processing computer executable instructions, programs, applications, and data in the form of software encoded as binary bits and bytes. Example of suitable microprocessors 162 include programmable logic devices such as field programmable gate arrays ("FPGA"), dedicated or customized logic devices such as application specific integrated circuits ("ASIC"), gate arrays, a complex programmable logic device, or any other suitable type of circuitry or microchip. In addition, to store the software and data processed by the microprocessor 162, the onboard controller 160 can include non-transitory computer readable and writeable memory 164 such as read only memory ("ROM"), random access memory ("RAM"), EPROM memory, flash memory, or another suitable storage medium like magnetic or optical storage. The onboard controller 160 may also include input/output interfaces 166 such as data ports, serial ports, parallel ports, USB ports, jacks, and the like.

To receive and process data about operations of the loading machine 124, the onboard controller 160 can be operatively associated with a plurality of sensors, actuators, and other systems disposed about the loading machine 124. By way of example, this may include a payload monitoring system 168 operatively associated with the bucket 128 to measure load and cycle counts, load weights and the like. Sensors may, for example, monitor load and dump cycles through which the bucket 128 is maneuvered, and may monitor load weights through operative association with the hydraulic system to measure hydraulic forces generated during load and dump cycles or may utilize other force measurement technologies. The payload monitoring system 168 and onboard controller 160 can track performance data such as by daily totals or the like.

To interface with an operator or technician, the onboard controller 160 can be operatively associated with an operator interface display 170, also referred to as a human-machine interface ("HMI"). The operator interface display 170 can be an output device to visually present information to a human operator regarding operation and regulation of the loading machine 124 and/or the payload monitoring system 168 as may be monitored by the onboard controller 160. The operator interface display 170 can be a liquid crystal display ("LCD") capable of presenting numerical values, text descriptors, graphs, charts, and the like regarding operations being performed at the worksite 100. In other embodiments, other visual displays may be used such as a cathode ray tube. The operator interface display 170 may have capabilities like as a touchscreen to receive input from a human operator to direct instructions or requests to the onboard controller 160. In other embodiments, other interface devices may be included such as dials, knobs, switches, keypads, keyboards, mice, printers, etc.

### Industrial Applicability

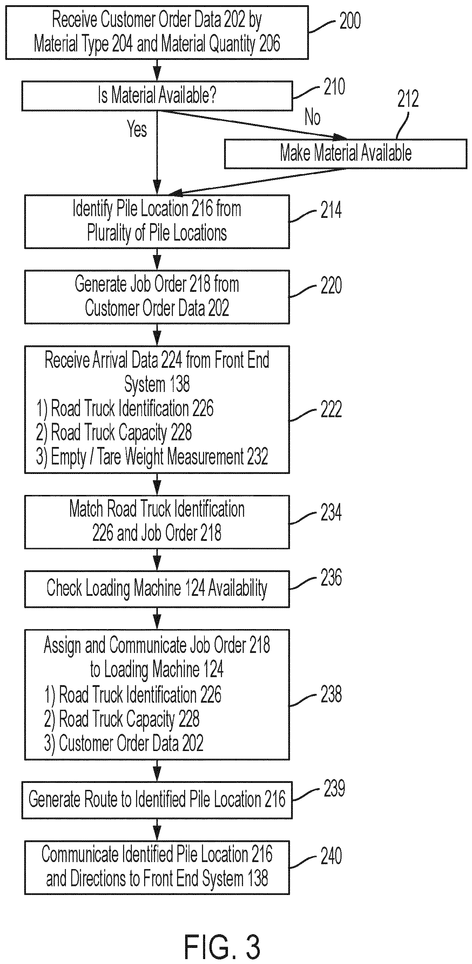

Referring to FIGS. 3-5, there is illustrated flow diagrams of exemplary processes the worksite computer system 140 and associated systems may utilize to manage, schedule, and organize operations at the worksite 100 including interaction between the haul trucks 122, loading machines 124, and road trucks 130. For example, the worksite 100 may be significant in size and the plurality of road trucks 130 arriving and departing may require scheduling and guidance to arrive at the correct material piles 110. In addition, the material must be mined and processed prior to arrival of the road trucks 130, and appropriate orders and instructions should be timely communicated to the loading machines 124. The processes depicted in the flow diagrams for accomplishing these tasks may include a series of steps or instructions implemented as non-transitory computer executable software code in the form of an application or program.

Referring to FIG. 3, which represents steps and processes that may be conducted from the backend system 144, in an initial order reception step 200, a customer may place an order in the form of customer order data 202 specifying the material type 204 and material quantity 206 desired. The customer order data 202 may be communicated to the worksite 100 electronically over the internet, may be placed by phone, or may be communicated in other suitable ways. In the initial order reception step 200, the customer order data 202 is input into the backend system 144 of the worksite computer in computer readable form for further processing. It will be appreciated that multiple customer order data 202 from different customers may be processed by the backend system 144 on a continuous or iterative basis.

In a query step 210, the backend system 144 determines whether the material is available in the type and quantity specified by the customer order data 202. If not, the query step 210 results in a processing step 212 to make the material available, for example, by mining and processing the material at the worksite 100 or by otherwise obtaining the material. For example, the backend system 144 may generate and communicate instructions to the mine 102 and the processing equipment 104 to mine and process material of the material type 204 and material quantity 206 reflected in the customer data order 202. The backend system 144 can also generate and communicate instructions to the haul trucks 122 so that the material is directed to and delivered the correct material piles 110.

In a subsequent location step 214, the backend system 144 determines an identified pile location 216 corresponding to the material ordered from the plurality of the material piles 110 including, for example, the first pile location 112, second pile location 114, and third pile location 116 at the worksite. The locality of the pile locations may be maintained as distinct zones about the worksite, worksite addresses, worksite coordinates, or in other suitable forms. Data regarding the plurality of pile locations may be preliminarily input to and maintained by the backend system 144. Identification of the pile location may be made in part, based on the customer order data which may include a material type and a material quantity and which may be used to assess the suitability of a particular pile for fulfilling the customer order. Once the identified pile location 216 is retrieved, the backend system 144 can start to generate a job order 218 in an order generation step 220 that compiles the relevant data from the customer order data 202, including material type 204 and material quantity 206. The job order 218 may be in a form or type suitable for electronic communication.

When the road truck 130 arrives at the worksite 100, it will check in with the scale house 134 where, in a data reception step 222, arrival data 224 can be input to the front end system 138. The arrival data 224 can include a road truck identification 226 and a road truck capacity 228. The road truck identification 226 can be a vehicle identification number, a fleet identification number, a serial number, a vehicle license number or other identifying characteristics. The road truck capacity 228 can be the quantity or weight of material the road truck 130 is capable of hauling, which may be subject to regulatory compliance requirements. In addition, during the data reception step 222, the road truck 130 may be weighed upon arrival at the scale house 134 to determine an empty or tare weight measurement 232, which can be accomplished using the scale 136. In another embodiment, weighing of the road truck 130 may be omitted. In yet another embodiment, based on the truck identification information, the weight information of the empty the road truck 130 may be accessed via a remote server or via backend server. In another embodiment, the empty or tare weight measurement 232 of the road truck 130 may be communicated by the truck operator or may have been prerecorded during a prior arrival of the road truck to the scale house 132.

The arrival data 224 may be communicated from the front end system 138 to the backend system 144 where, in a matching step 234, the road truck identification 226 can be matched to the job order 218. In another embodiment, the matching step 234 may be performed by the front end system 138 and then communicated to the backend system 144. In a check availability step 236, the backend system 144 checks availability of the loading machines 124 to load the road truck 130. For example, the loading machines 124 may be associated or preassigned to specific piles 110 or may be assigned to specific zones in which the relevant pile 110 is located. As another example, the loading machines 124 may travel among the plurality of pile locations based on demand. The check availability step 236 can identify a particular loading machine 124 based on, for example, location to the identified pile location or loading capabilities, and in an assignment step 238 assigns and communicates the job order 218 to the assigned loading machine 124. Communication of the job order 218 to the loading machine 124 can occur wirelessly, for example, using the telematics system 146 associated with the backend system 144. The job order 218 communicated to the loading machine 124 can include relevant data such as the road truck identification 226, road truck capacity 228, location status of the road truck at or arriving at the worksite, and other relevant customer order data 202 such as material type 204 and material quantity 206. The location of the road truck 130 may be determined through the GPS system 150, and the location or the road truck with respect to the identified pile location can be used to estimate a time of arrival of the road truck at the identified pile location.

In an embodiment, the backend system 144 can be configured to determine a route or path through the worksite 100 for the road truck and in a route generation step 239 can generate a route or path for the road truck 130 to travel to the identified pile locations 216, which may be based on the shortest distance or time of travel. To provide instructions to the road truck 130, in a communication step 240 the backend system 144 can communicate the identified pile location 216 and directions which may include the generated route or path to the pile location from the scale house 134 back to the front end system 138 where they can be communicated to the operator of the road truck 130. In embodiments where the road truck 130 includes a wireless transmitter/receiver 143, the information can be conveyed electronically and can include digital maps, directions and the like.

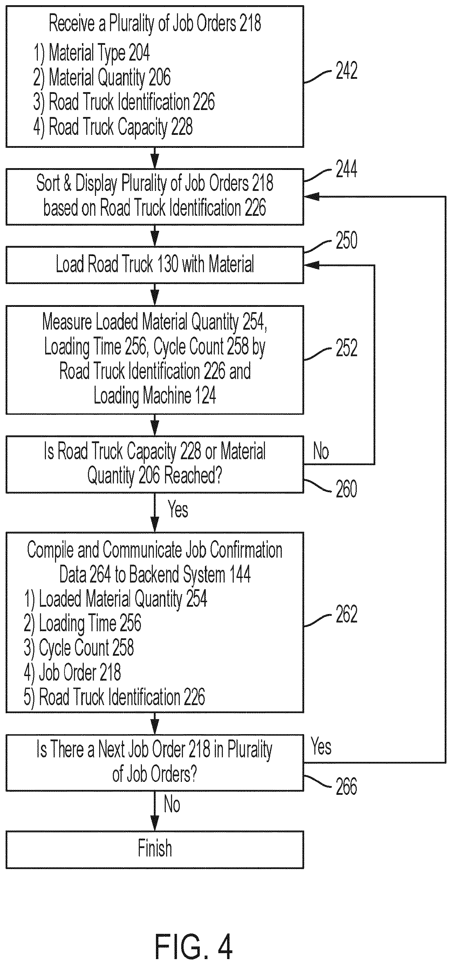

Referring to FIG. 4, which represents steps and processes that may be conducted by the loading machine 124. In a data reception step 242, the loading machine 124 may receive a plurality of job orders 218 from the backend system 144, which may be communicated electronically by the telematics system 146. These may include the material type 204 and the material quantity 206 associated with the particular job orders 218. These may also include road truck identification 226 and road truck capacity 228 obtained from the arrival data 224 when the road truck 130 arrives at the scale house 134. In a sorting step 244, the plurality of job orders 218 assigned to and received by the loading machine 124 can be sorted and displayed to the operator of the loading machine.

For example, referring to FIG. 2, the operator interface display 170 may visually present a plurality of job orders 218 to the operator by, for example, road truck identification 226. Moreover, the job orders 218 may be sorted by suitable criteria. For example, the job orders 218 may be sorted by the order in which the road trucks 130 arrive at the worksite 100, order in which the road trucks 130 arrive at the identified pile location 216, the material quantity 206 corresponding to the job order 218, proximity of the loading machine 124 and road truck 130 as determined through the GPS system 150, or other suitable criteria.

Referring back to FIG. 4, the loading machine 124 may conduct a loading operation 250 in which material is loaded from the material pile 110 to the road truck 130. During the loading operation 250, the onboard controller 160 and/or payload monitoring system 168 associated with the loading machine 124 can conduct a measurement step 252 to measure attributes and progress associated with the loading operation. For example, attributes may include loaded material quantity 254, job duration or loading time 256, cycle count 258 that represents the number of operating cycles such as loading and dumping that the loading machine 124 conducts. The measured attributes may be associated with the road truck 130 being loaded via the road truck identification 226, associated by the loading machine 124 conducting the loading operation 250, or otherwise. As illustrated in FIG. 2, the attributes measured in the measurement step 252 may be displayed in real time on the operator interface display 170 on the loading machine 124. In an embodiment, the payload monitoring system 168 may be further configured to cause to display an estimated remaining material quantity and/or estimated remaining loading time for a given job order 218. In a loading query step 260, the onboard controller 160 and/or payload monitoring system 168 may assess whether the loading operation 250 is complete, for example, by querying whether the road truck capacity 228 has been reached or whether the material quantity 206 associated with the job order 218 has been reached. If not, the onboard controller 160 may direct that the loading machine 124 return to the loading operation 250. By repeatedly measuring and assessing the material loaded with road truck capacity 228 and material quantity 206, the loading query step 260 avoids overloading or under loading the road truck 130.

To make the measured attributes associated with the loading operation 250, available for tracking and assessment, the onboard controller 160 in a data compilation step 262 can compile and communicate such information to the backend system 144 as job confirmation data 264. Examples of job confirmation data 264 can include the loaded material quantity 254, the loading time 256, the cycle count 258, and road truck identification 226 associated with the job order 218 and/or road truck identification 226. The onboard controller 160 can communicate the job confirmation data 264 to the backend system 144 wireless or electronically via the telematics system 146. In a subsequent query step 266, the onboard controller 160 can query whether there are additional job orders 218 to perform and, if so, can return to the sorting step 244 to retrieve the next job order 218 as may appear in the operator interface display 170.

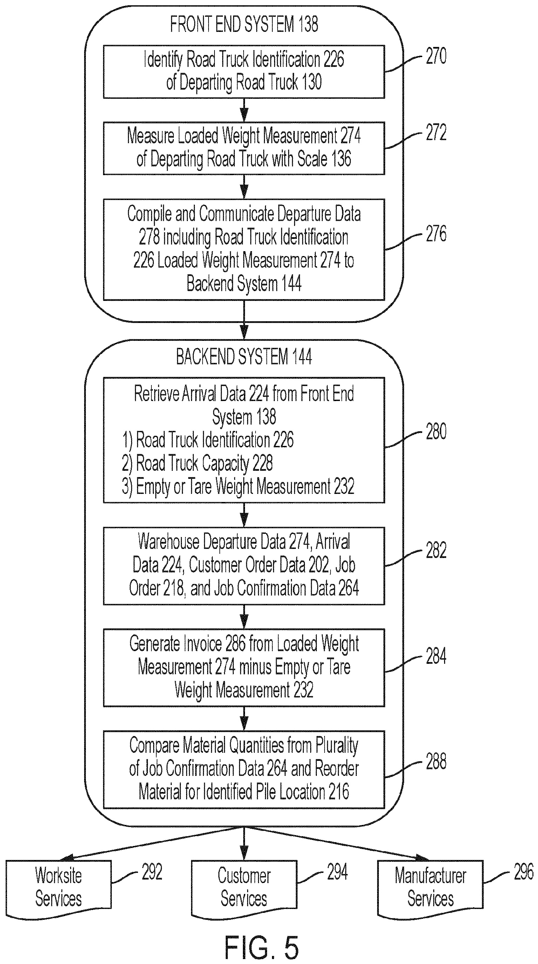

Referring to FIG. 5, which represents the steps and processes that may be conducted upon departure of the road truck 130 from the worksite 100, the front end system 138 may collect certain departure data when the road truck checks out at the scale house 134. It should be noted the road truck 130 may check out at the same or different scale house 134 as which it checked in. In an identification step 270, the road truck identification 226 of the departing road truck 130 is obtained. In a measurement step 272, the loaded weight measurement 274 of the departing road truck 130 can be obtained by, for example, using the scale 136 associated with the scale house 134. In a compiling step 276, the front end system 138 can compile and communicate the departure data 278, including the road truck identification 226 and the loaded weight measurement 274, to the backend system 144.

To assess and process the departure data 278, the backend system 144 in a retrieval step 280 can retrieve the arrival data 224 that was previously sent by the front end system 138 upon arrival of the road truck 130 to the scale house 134. The arrival data 224 can include the road truck identification 226, the road truck capacity 228, and the empty or tare weight measurement 232 associated with the road truck 130. In a data warehousing step 282, the data gathered from the different procedures associated with the road truck 130 and loading operation 250 can be organized and stored for further analysis, including the customer order data 202, job order 218, arrival data 224, job confirmation data 264, and departure data 278. For example, to bill and receive payment for the material, the backend system 144 in an invoice generation step 284 can generate an invoice 286 by subtracting the loaded weight measurement 274 from the empty or tare weight measurement 232 for the departing load truck 130. The generated invoice therefore reflects the quantity or weight of material the load truck 130 received at the worksite 100. Additionally, through matching the customer order data 202 and road truck identification 226, the generated invoice 286 can be sent to the appropriate customer. In a further comparison and reorder step 288, the backend system 144 can compare the data from a plurality of job confirmation data 264 associated with an identified pile location 216 and reorder material to replenish an identified pile location 216 if appropriate.

In a further embodiment, the worksite computer system 140 can be configured to provide support and services usable by different individuals and entities associated with the worksite 100, road trucks 130, and loading operations 250. The support and services can provide such individuals and entities with access to the reconciled data from the data warehousing step 282 and other data processing and analysis that may be conducted on the backend system 144. The support and services may be provided on a subscription basis through a subscription site 290 or portal into the backend system 144, particularly in the embodiments where the backend system 144 is maintained as an ASP model. For example, the backend system 144 can generate worksite services 292 that can be used by the worksite 100 to manage operations. Relevant services may include material production and processing, logistics analysis, order processing, etc. The backend system 144 may also generate customer services 294 that are usable by customers of the worksite 100, including those that operate the road trucks 130. Such customer services 294 may include efficiency analysis relating to road truck operations and operation time analysis, maintenance analysis specific to road trucks based on loading conditions and cycles and time, and the like. The backend system 144 may also generate manufacturer services 296 that may be usable by manufacturers of machines associated with the worksite 100 and operations thereat including the haul trucks 122, loading machines 124, road trucks 130, and the like.

It will be appreciated that the foregoing description provides examples of the disclosed system and technique. However, it is contemplated that other implementations of the disclosure may differ in detail from the foregoing examples. All references to the disclosure or examples thereof are intended to reference the particular example being discussed at that point and are not intended to imply any limitation as to the scope of the disclosure more generally. All language of distinction and disparagement with respect to certain features is intended to indicate a lack of preference for those features, but not to exclude such from the scope of the disclosure entirely unless otherwise indicated.

Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context.

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein or otherwise clearly contradicted by context.

## Claims

1. A data system (150) for managing material (118) loading at a worksite (100) comprising:
a backend system (144) including non-transitory data storage storing a plurality of pile locations each having a particular material (118), the backend system (144) configured to receive a customer order data (202) including a material type (204) and a material quantity (206), to identify an identified pile location (216) from the plurality of pile locations based on a comparison of the customer order data (202) and the plurality of the pile locations, and to generate a job order (218) associating the customer order data (202) with a loading machine (124);
a front end system (138) configured to generate arrival data (224) associated with a road truck arriving at the worksite (100) and to communicate the arrival data (224) to the backend system (144), the arrival data (224) including a road truck identification (226); and
an onboard controller (160) associated with the loading machine (124), the onboard controller (160) configured to receive the job order (218) matched to the road truck identification (226) by the backend system (144).

2. The data system (150) of claim 1, wherein the front end system (138) is configured to receive the identified pile location (216) from the backend system (144) and to communicate the identified pile location (216) to the road truck.

3. The data system (150) of claim 2, wherein the backend system (144) assigns the job order (218) to the loading machine (124) based on one or more of proximity of the loading machine (124) to the identified pile location (216) or loading capabilities of the loading machine (124).

4. The data system (150) of claim 3, wherein the front end system (138) is operatively associated with a scale and is configured to generate departure data (278) associated from the road truck departing the worksite (100), the departure data (278) including a loaded weight measurement (274) of the road truck from the scale and the road truck identification (226).

5. The data system (150) of claim 4, wherein the onboard controller (160) is further configured with an operator interface display (170) and is configured to display a plurality of job orders (218) matched to a plurality of road truck identifications (226).

6. The data system (150) of claim 5, wherein the backend system (144) is configured to generate an invoice (286) based on the loaded weight measurement (274) and on an empty or tare weight measurement (232) of the road truck.

7. The data system (150) of claim 7, wherein the onboard controller (160) is configured to compile job confirmation data (264) including a loading time (256), a loaded material quantity (206), and cycle count (258).

8. The data system (150) of claim 7, wherein the backend system (144) is configured to generate a processing order to make material (118) available if the customer order data (202) cannot be filled.

9. The data system (150) of claim 8, wherein the backend system (144) is configured to conduct a data warehousing step in which the customer order data (202), the job order (218), arrival data (224), the job confirmation data (264), and the departure data (278), the backend system (144) operatively associated with a subscription service portal to provide access to the warehoused data.

10. A method of managing material (118) loading at a worksite (100) comprising:
receiving a customer order data (202) specifying a material type (204) and a material quantity (206);
identify an identified pile location (216) from among a plurality of pile locations based on comparing the customer order data (202) with the plurality of pile locations;
generating a job order (218) based on the customer order data (202) and a loading machine (124);
receiving arrival data (224) from a front end system (138) indicative of a road truck arriving at the worksite (100), the arrival data (224) including a road truck identification (226);
communicating the identified pile location (216) to the front end system (138) for relaying the identified pile location (216) to the road truck;
associating the job order (218) with the road truck identification (226); and
communicating the job order (218) to an onboard controller (160) associated with the loading machine (124).
